# EUROPEAN PATENT SPECIFICATION

(11) **EP 1 657 081 B1**
(45) Date of publication and mention of the grant of the patent: **04.04.2012**
(21) Application number: 05022798.2
(22) Date of filing: 19.10.2005
(51) Int. Cl.: B60C 15/04

(54) **Pneumatic tire with cable bead core**
Luftreifen mit Kabelkern
Pneumatique comprenant une tringle de type câblé

(30) Priority: 12.11.2004 JP 2004329509
(43) Date of publication of application: 17.05.2006
(73) Proprietor: Sumitomo Rubber Industries, Ltd., Kobe-shi, Hyogo-ken (JP)
(72) Inventor: Suzuki, Masumi, c/o Sumitomo Rubber Industries Ltd., Kobe-shi, Hyogo-ken (JP)
(74) Representative: Manitz, Finsterwald & Partner GbR

(56) References cited:
- EP-A- 1 080 950
- DE-A1- 3 440 440
- FR-A- 2 639 006
- PATENT ABSTRACTS OF JAPAN vol. 2003, no. 12, 5 December 2003 (2003-12-05) -& JP 2004 142478 A (BRIDGESTONE CORP), 20 May 2004 (2004-05-20)

## Description

### BACKGROUND OF THE INVENTION

### Field of the Invention

The present invention relates to a pneumatic tire with a so-called cable bead as a bead core disposed in a bead portion.

### Description of the Related Art

A bead core is disposed in a bead portion of a pneumatic tire. An end of a carcass ply is usually turned up around the bead core. As the bead core, so-called cable having a circular cross section comprising an annular core and at least one sheath layer surrounding the core are known. The sheath is formed by spirally winding at least one, preferable, a plurality of sheath wires around the core.

When the cable bead is twisted, the sheath wires are wound around the core tightly or loosely. Therefore, the cable bead has a merit that the cable bead is flexibly deformed with respect to the twisting. The bead core receives various forces from a carcass ply during running of a tire, but in the case of a tire using the cable bead, such forces are absorbed by the cable bead. Therefore, when the tire is loaded for example, the carcass ply is rotated around the core of the cable bead, the distortion of the carcass cord can be moderated, and the durability of the tire is enhanced. When a steering wheel of a vehicle is operated, the linearity of response thereof is enhanced. This is of help to enhance the steering stability.

According to the conventional tire, however, when the tire is vulcanized and formed, a portion of rubber permeates into the cable bead, and there is a tendency that the flexibility of the cable bead is deteriorated. Hence, the present inventors found that the above-described merit of the cable bead is not sufficiently exhibited in the conventional pneumatic tire.

DE 34 40 440 A1 discloses a continuous core ring as an inlay for the beads of the pneumatic tyres of vehicles, which ring is made up of wires or wire cables and can have an inner core around which at least one layer of wire is arranged. In order to increase the security of a tyre against being shed, it is proposed that at least the wires of the outer layer be connected to one another by means of a solder or an adhesive.

EP-A-1 080 950 depicts a pneumatic tyre comprising a pair of bead portions each provided therein with a bead core made of a plurality of windings of at least one wire.

JP 2004 142478 A provides a steel radial tire including a pair of bead cores and a ply crossed over the bead cores with both end portions wound over for covering the cores, the section of each of the cores having a polygon shape with five or more cords.

### SUMMARY OF THE INVENTION

The present invention has been accomplished in view of the above problem, and it is an object of the invention to provide a pneumatic tire capable of sufficiently exhibiting the merit of the cable bead.

In accordance with the present invention, a pneumatic tire comprises:
a pair of bead portions;
a carcass comprising a carcass ply extending between the bead portions;
a pair of bead cores each disposed in each bead portion, said bead core comprising an annular core formed from one monofilament cord and having a circular cross section, and a sheath having at least one sheath wire extending helically around the core; and
a wrapping member wrapping the bead core and made of fabric-like body having an organic fiber cord.

### BRIEF DESCRIPTION OF THE DRAWINGS

Fig. 1 is a sectional view showing an embodiment of a pneumatic tire of the present invention;
Fig. 2 is an enlarged perspective view of a bead core of the tire;
Figs. 3(A) and (B) are plan views used for explaining a wrapping member;
Figs. 4(A) and (B) are perspective views used for explaining a forming method of the wrapping member; and
Fig. 5 is a side view used for explaining the forming method of the wrapping member.

### DESCRIPTION OF THE PREFERRED EMBODIMENTS

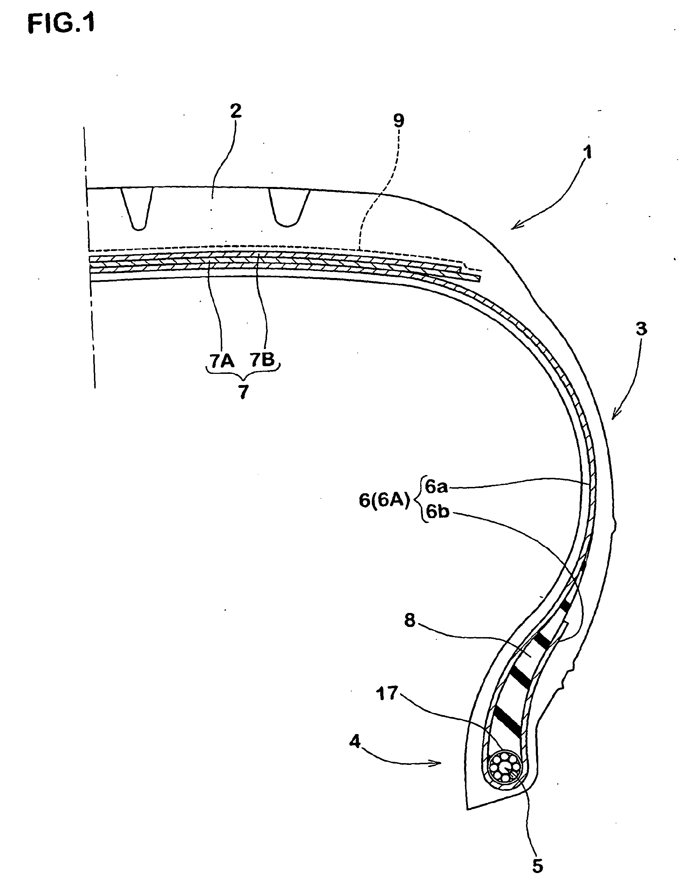

In FIG. 1, a pneumatic tire 1 for passenger car in accordance with present invention comprises: a tread portion 2; a pair of side wall portions 3; a pair of bead portions 4 with a bead core 5 therein; a carcass 6 comprising at least one carcass pry 6 of cords which extend between the bead portions 4 through the tread portion 2 and sidewall portions 3; and a belt 7 disposed radially outside the carcass in the tread portion 2.

The carcass 6 is composed of at least one ply, in this example only one ply 6A of cords arranged radially at an angle of 70 to 90 degrees with respect to the tire equator C.

The carcass ply 6A of cords is turned up around the bead cores 5 from the axially inside to the axially outside of the tire so as to form a pair of turnup portions 6b and a main portion 6a therebetween.

For the carcass cords, organic fiber cords, e.g. nylon, polyester, rayon, aramid and the like and steel cords may be used. From a viewpoint of a tire weight saving, the organic fiber cord is preferably used for the carcass code.

Each bead portion 4 is provided between the carcass ply main portion 6a and turnup portion 6b with a rubber bead apex 8 extending and tapering radially outwardly from the bead core 5.

The belt 7 comprises at least two cross plies of rubberized parallel belt cords which are laid at an angle of from 10 to 35 degrees with respect to the tire equator C. In this example, the belt 7 is composed of a radially outer ply 7B and a radially inner ply 7A. For the belt cords, steel cords, and high modulus organic fiber cords such as aramid, rayon and like can be used.

In order to further improve the high-speed durability of the belt 7, a band 9 which covers at least edge portions of the belt is disposed radially outside the belt 7. Here, the band 9 is a cord layer made of at least one cord spirally wound, or parallel cords having at angle of from 0 to 5 degrees with respect to the circumferential direction of the tire. In this embodiment, the band 9 comprises a single band ply having an eaual width substantially with the belt 7. For the band cords, organic fiber cords, e.g. nylon, rayon, aramid and the like may be used.

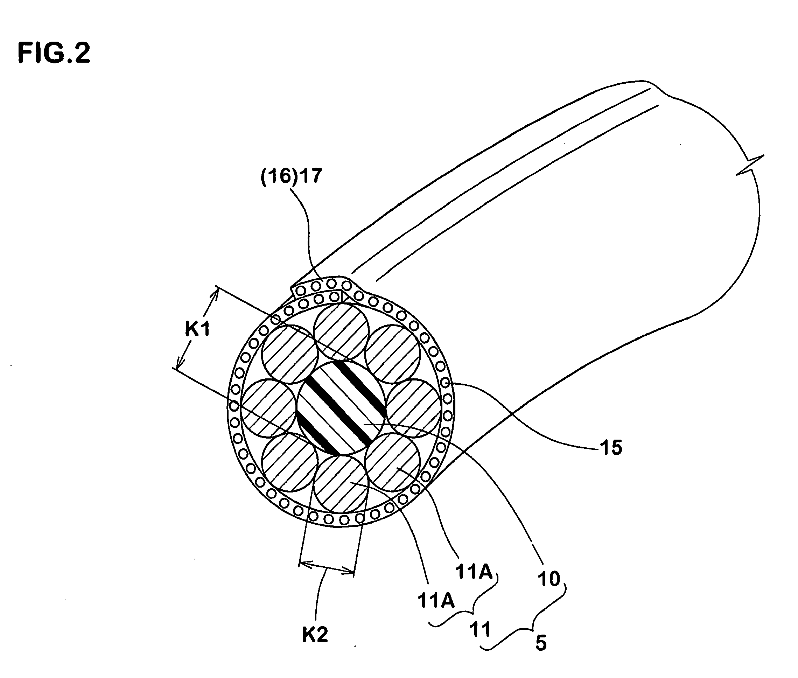

A cable bead having a circular cross section is used as the bead core 5. As shown in Fig. 2 in an enlarged scale, the bead core 5 comprises an annular core 10 formed from one monofilament, and one or more sheaths 11 surrounding the core 10. The sheath 11 comprises at least one, preferably a plurality of sheath wires 11A extending helically around the core 10. In this embodiment, the sheath 11 comprises one layer.

The annular core 10 mainly functions as a core around which the sheath wires 11A is helically wound, and as a core for holding the wound shape of the sheath wires 11A when the sheath wires 11A are vulcanized and molded. The strength of the bead core 5 is maintained mainly by the sheath wires 11A. The core 10 does not require so much strength. Therefore, metal material such as iron having high strength can of course be used for the core 10, but resin material having tensile elastic modulus of 1000 kg/mm² or less such as nylon, polyvinyl alcohol, polyethylene terephthalate and the like can be used for the core 10. As the metal material, a steel wire having carbon content of 0.1 to 0.9 wt% is preferable.

If a diameter K1 of the core 10 is extremely small, the second moment of the area of the sheath 11 becomes small and as a result, there is a tendency that the flexural rigidity of the bead core 5 becomes extremely small. If the diameter K1 of the core 10 becomes extremely large on the contrary, the bead core 5 becomes large unnecessarily, and this increases the weight of the tire. From such a viewpoint, the diameter K1 of the core 10 is preferably in a range of from 1.5 to 8.0 mm.

Metal material is preferable as the sheath wires 11A which becomes the strength member. More concretely, a piano wire defined in JIS G3502 and a steel wire such as hard-drawn wire defined in JIS G3506 are preferably used. In this embodiment, a hard-drawn wire having a diameter K2 of from 0.8 to 2.6 mm (K2<K1) and having carbon content of 0.65 to 0.88 wt% is preferably employed as the sheath wires 11A. To enhance the adhesion with respect to rubber, it is preferable that the surface of the core 10 made of metal material and a surface of the sheath wires 11A are plated with brass, zinc or the like.

A periphery of the bead core 5 is wrapped by a wrapping member 17. The wrapping member 17 is made of a sheet-like body 16 in which an organic fiber cord 15 is used. Examples of the organic fiber cord 15 of the sheet-like body 16 are nylon, polyester and vinylon.

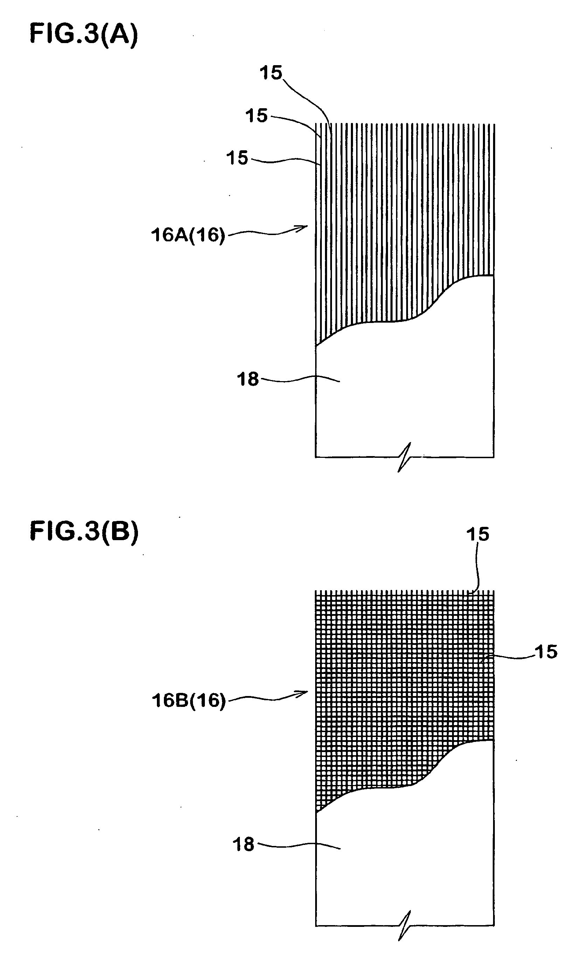

As the sheet-like body 16, a cord arranging body 16A in which the organic fiber cords 15 are arranged in parallel to each other as shown in Fig. 3(A), and a fabric body 16B in which the organic fiber cords 15 are arranged such that they intersect with each other are preferably used as shown in Fig. 3(B). The intersecting angle may be 90 degrees as shown in the drawing, or the cords 15 may be disposed in three directions and they may intersect with each other in a form of a triangle. In this embodiment, the fabric body 16B is used as the sheet-like body 16 of the wrapping member 17. Such a fabric body 16B has a small gap between the cords, and this is especially effective for preventing the permeation of rubber during vulcanizing.

It is preferable that the sheet-like body 16 is provided at its at least one surface, preferably both surfaces with topping rubbers 18 having small coating thickness. With this, the topping rubber 18 of the sheet-like body 16 can excellently be adhered to a carcass ply 6A. The sheet-like body 16 may not have the topping rubber 18, and the sheet-like body 16 may comprise only the cord arranging body 16A and/or the fabric body 16B.

In such a wrapping member 17, the organic fiber cord 15 can prevent the rubber from flowing during vulcanizing in a mold. Therefore, the rubber of the bead portion 4 is restrained from permeating into the bead core 5. Thus, the flexibility of the cable bead with respect to the twisting can be maintained, and the merit of the cable bead for enhancing the durability and steering stability can sufficiently be exhibited. Further, the wrapping member 17 can prevent the bead core 5 and the carcass ply 6A from coming into direct contact with each other. Thus, it is possible to prevent the carcass cord from being damaged. The sheet-like body 16 provided at its both surfaces with the topping rubbers 18 enhances the adhesion.

Since the wrapping member 17 has the organic fiber cord 15, the stability of shape, size, strength, and the like are secured. Thus, even if the thickness of the sheet-like body 16 is reduced, the operability of procedure for coating the bead core 5 with the sheet-like body 16 is not deteriorated by the extension, damage and the like. Further, the weight of the tire can be reduced. The thickness of the sheet-like body 16 is not especially limited, but it is preferable that the thickness is not more than 0.8 mm, and more preferably not more than 0.4 mm.

To prevent the rubber from permeating into the bead core 5 more reliably, the number of the organic fiber cords 15 per 5cm of the sheet-like body 16 is preferably not less than 20, more preferably not less than 30, and also preferably not more than 40. when the sheet-like body 16 is the fabric body 16B, it is only necessary that the number of at least one of warps and wefts is in the above-described range. The upper limit of the number of threads is not limited especially. As the sheet-like body 16, it is possible to employ the cord arranging body 16A or the fabric body 16B in which a gap between the organic fiber cords 15 and 15 is substantially zero. Such a sheet-like body 16 can prevent the permeation of the rubber more excellently.

If the fineness of the organic fiber cord 15 is increased, the thickness of the wrapping member 17 is largely increased, and this is not preferable for weight reduction. In view of such a point of view, the fineness of the organic fiber cord 15 is preferably not more than 1500 dtex, more preferably not more than 1000 dtex, further preferably not more than 800 dtex, especially preferable not more than 400 dtex, and the organic fiber cord 15 is monofilament, twine or spinning thread. The lower limit of the fineness is not limited only if the stability of size, strength and the like of the wrapping member 17 can be secured.

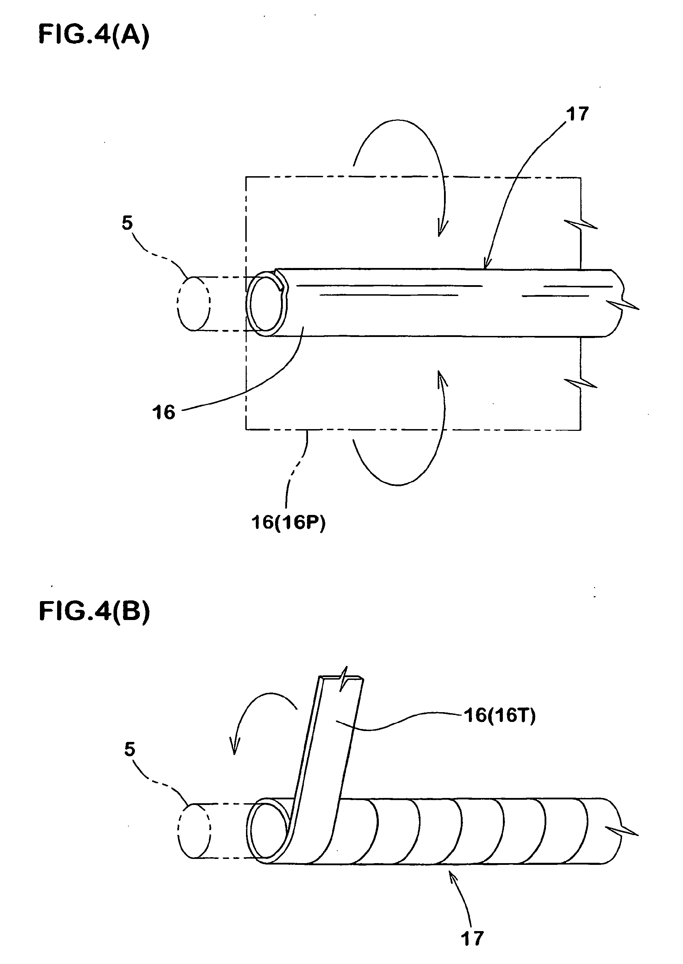

As the forming method of the wrapping member 17, the bead core 5 is wrapped by folding a wide fabric-like body 16P along the direction of a circumference of the bead core 5, and both edges of the body 16 are overlapped with each other so as to enclose the bead core 5 as shown in Fig. 4(A).

As shown in Fig. 4(B), the wrapping member 17 can also be formed by helically winding a narrow tape-like fabric-like body 16T around the bead core 5 as shown in Fig. 4(B). In this case, since the sheet-like body 16 and the bead core 5 are prone to adhere to each other, the finishing precision of the pneumatic tire 1 is enhanced. It is especially preferable that the tape-like sheet-like bodies 16T are wound such that their side lines come into contact with each other.

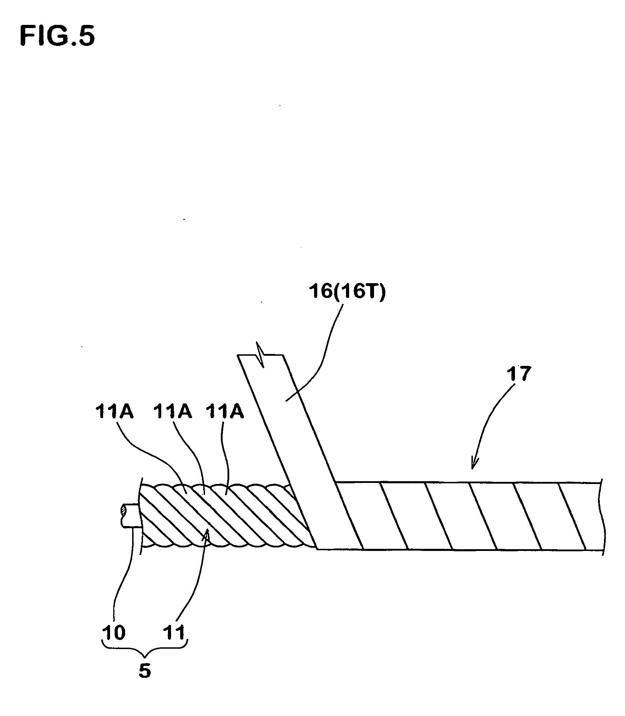

Further, if the helical direction of the fabric-like body 16 and the helical direction of the sheath wires 11A are aligned with each other as shown in Fig. 5, a force from the carcass ply 6A can directly be transmitted to the sheath wires 11A. Therefore, the distortion of the carcass ply 6A can be moderated more effectively.

Although the number of the sheath 11 is one in this embodiment, the number can be increased in accordance with required tire performance. In the sheath wire 11A, each sheath may have different material and diameter.

The tire of the present invention is not limited to a tire for a passenger car, and is employed for tires in various categories such as a heavy load tire, a small truck tire, an automatic two-wheeled vehicle tire, an aircraft tire and the like.

Although the especially preferable embodiment of the present invention has been described in detail, the invention is not limited to the illustrated embodiment, and the invention can variously be modified and carried out.

### Comparison Test:

Radial tires (215/45R17) for a passenger car having the structure as shown in Figs. 1 and 2 were manufactured based on the use shown in Table 1. Rim-assembling operability and the steering stability of these tires were tested in the following manner. For comparison, a rubber sheet having thickness of 1.0mm was used instead of the wrapping member.

The common specification of the bead core is as follows:
Core
Diameter: 1.80mm
Material: steel wire having carbon content of 0.5wt%
Sheath
layer: 1
The number of sheath wires in cross section: 7
Diameter of sheath line: 1.40mm
Material: steel wire having carbon content of 0.72wt% Rim-assembling operability:

Each prototyped tire was manually mounted on a rim (17×7JJ) using a tire lever, and the rim-assembling operability was evaluated on a scale from 1 to 10 while defining the conventional example as 6. The greater the numerical value is, the more excellent the rim-assembling operability is. Steering stability:

The prototyped tires were mounted on all wheels of a car (FR car of 2500cc) under conditions of rim (17×7JJ) and internal pressure (230kPa), the car was allowed to run on a dry asphalt road surface which was a tire test course. Characteristics concerning a stick and a steering wheel response were evaluated by a driver's feeling evaluation on a scale from 1 to 10 while defining the conventional example as 6. The greater the numerical value is, the more excellent the steering stability is.

**Table 1**

| | Conventional | Ex.1 | Ex.2 | Ex. 3 | Ex.4 |
|---|---|---|---|---|---|
| Wrapping sheet | (Rubber sheet) | Presence | Presence | Presence | Presence |
| Thickness | 1.0 | 0.75 | 0.4 | 0.75 | 0.75 |
| Cloth material | - | arranging body | Fabric body | Fabric body | Fabric body |
| Cord Fineness | - | Nylon 1400dtex | Vinylon 300dtex | Nylon 800dtex | Nylon 1000dtex |
| Arrangement density (the number of cords/5cm) | - | 49 | 44 | 49 | 49 |
| Presence or absence of topping rubber | - | Both surfaces | Both surfaces | Both surfaces | Both surfaces |
| Rim-assembling operability | 6 | 7 | 8 | 8 | 8 |
| Steering stability | 6 | 7 | 8 | 7 | 8 |

In the case of the example tires of the present invention, flexibility of the bead core was secured and as a result, it could be confirmed that the rim-assembling operability and the steering stability were enhanced. In the case of the pneumatic tire of the invention, the adhesion between the bead core and a member which is adjacent to the bead core, e.g., the carcass ply or the bead apex can sufficiently be secured. Since the rubber is prevented from entering into the bead core by the lapping member, the flexibility of the cable bead structure is maintained, and its merit can sufficiently be exhibited. Since the lapping member has the organic fiber cord, the tire can be reduced in thickness and weight.

## Claims

1. A pneumatic tire comprising:
a pair of bead portions (4);
a carcass (6) comprising a carcass ply (6A) extending between the bead portions (4);
a pair of bead cores (5) each disposed in each bead portion (4), said bead core (5) comprising an annular core (10) and a sheath (11) having at least one sheath wire (11A) extending helically around the annular core (10); and
a wrapping member (17) wrapping the bead core (5) and made of fabric-like body,
**characterizing in that**,
said annular core (10) is formed from one monofilament cord and has a circular cross section, and
said wrapping member (17) is made of fabric-like body having an organic fiber cord (15).

2. A pneumatic tire according to claim 1, wherein said fabric-like body comprises organic cords (15) each arranged with parallel.

3. A pneumatic tire according to claim 1, wherein said fabric-like body comprises organic cords (15) arranged at the direction which the cords intersect.

4. A pneumatic tire according to claims 1 to 3, wherein said fabric-like body further comprises topping rubber coating (18) at least one surface thereof.

5. A pneumatic tire according to claim 1, wherein said carcass ply (6A) is turned up around the bead core (5) wrapped by the wrapping member (17).

6. A pneumatic tire according to claim 1, wherein said annular core (10) has a diameter of from 1.5 to 8.0 mm.

7. A pneumatic tire according to claim 1, wherein said annular core (10) is made of a resin material having tensile elastic modulus of 1000 kg/mm² or less.

8. A pneumatic tire according to claim 1, wherein said annular core (10) is made of a metal material having carbon content of 0.1 to 0.9 wt%.

9. A pneumatic tire according to claim 1, wherein said sheath wire (11A) is made of a hard-drawn wire having a diameter of from 0.8 to 2.6 mm.

10. A pneumatic tire according to claim 9, wherein said sheath wire (11A) has a carbon content of in a range of from 0.65 to 0.88 wt%.

11. A pneumatic tire according to claim 1, wherein said organic fiber cord (15) has the fineness of not more than 1500 dtex.

12. A pneumatic tire according to claim 1, wherein said organic fiber cord (15) has the fineness of not more than 800 dtex.

13. A pneumatic tire according to claim 1, wherein said organic fiber cord (15) has the fineness of not more than 400 dtex.

14. A pneumatic tire according to claim 1, wherein said wrapping member (17) is formed by folding the fabric-like body along the direction of a circumference of the bead core (5), and overlapping both edges thereof.

15. A pneumatic tire according to claim 1, wherein said wrapping member (17) is formed by helically winding the fabric-like body around the bead core (5).

16. A pneumatic tire according to claim 15, wherein said fabric-like body is helically wound with the same direction of the sheath wire (11A).

## Patentansprüche

1. Luftreifen, umfassend:
ein Paar Wulstabschnitte (4);
eine Karkasse (6), die eine Karkasslage (6A) umfasst, die sich zwischen den Wulstabschnitten (4) erstreckt;
ein Paar Wulstkerne (5), die jeweils in jedem Wulstabschnitt (4) angeordnet sind, wobei der Wulstkern (5) einen Ringkern (10) und einen Mantel (11) umfasst, der zumindest einen Manteldraht (11A) aufweist, der sich wendelförmig um den Ringkern (10) herum erstreckt; und
ein Wickelelement (17), das den Wulstkern (5) umwickelt und aus einem textilartigen Körper hergestellt ist,
**dadurch gekennzeichnet, dass**
der Ringkern (10) aus einem Monofilamentkord gebildet ist und einen kreisförmigen Querschnitt aufweist, und
das Wickelelement (17) aus einem textilartigen Körper hergestellt ist, der einen organischen Faserkord (15) aufweist.

2. Luftreifen nach Anspruch 1, wobei der textilartige Körper organische Korde (15) umfasst, die jeweils parallel angeordnet sind.

3. Luftreifen nach Anspruch 1, wobei der textilartige Körper organische Korde (15) umfasst, die in der Richtung angeordnet sind, in der sie die Korde schneiden.

4. Luftreifen nach den Ansprüchen 1 bis 3, wobei der textilartige Körper eine Gummierungskautschukbeschichtung (18) auf zumindest einer Fläche davon umfasst.

5. Luftreifen nach Anspruch 1, wobei die Karkasslage (6A) um den mit dem Wickelelement (17) umwickelten Wulstkern (5) umschlagen ist.

6. Luftreifen nach Anspruch 1, wobei der Ringkern (10) einen Durchmesser von 1,5 - 8,0 mm aufweist.

7. Luftreifen nach Anspruch 1, wobei der Ringkern (10) aus einem Harzmaterial mit einem elastischen Zug-Elastizitätsmodul von 1000 kg/mm² oder weniger hergestellt ist.

8. Luftreifen nach Anspruch 1, wobei der Ringkern (10) aus einem Metallmaterial mit einem Kohlenstoffgehalt von 0,1 bis 0,9 Gew.-% hergestellt ist.

9. Luftreifen nach Anspruch 1, wobei der Manteldraht (11A) aus einem hartgezogenen Draht mit einem Durchmesser von 0,8 bis 2,6 mm hergestellt ist.

10. Luftreifen nach Anspruch 9, wobei der Manteldraht (11A) einen Kohlenstoffgehalt in einem Bereich von 0,65 bis 0,88 Gew.-% aufweist.

11. Luftreifen nach Anspruch 9, wobei der organische Faserkord (15) eine Feinheit von nicht mehr als 1500 dtex aufweist.

12. Luftreifen nach Anspruch 1, wobei der organische Faserkord (15) eine Feinheit von nicht mehr als 800 dtex aufweist.

13. Luftreifen nach Anspruch 1, wobei der organische Faserkord (15) eine Feinheit von nicht mehr als 400 dtex aufweist.

14. Luftreifen nach Anspruch 1, wobei das Wickelelement (17) gebildet ist, indem der textilartige Körper längs der Richtung eines Umfangs des Wulstkerns (5) gefaltet wird und dessen beide Ränder überlappt werden.

15. Luftreifen nach Anspruch 1, wobei das Wickelelement (17) gebildet ist, indem der textilartige Körper wendelförmig um den Wulstkern (5) gewickelt ist.

16. Luftreifen nach Anspruch 15, wobei der textilartige Körper in der gleichen Richtung wie der Manteldraht (11A) wendelförmig gewickelt ist.

## Revendications

1. Bandage pneumatique comprenant :
une paire de portions de talon (4) ;
une carcasse (6) comprenant une nappe de carcasse (6A) s'étendant entre les portions de talon (4) ;
une paire d'âmes de talon (5) disposées chacune dans chaque portion de talon (4), ladite âme de talon (5) comprenant un noyau annulaire (10) et
une gaine (11) ayant au moins un fil de gaine (11A) s'étendant en hélice autour du noyau annulaire (10) ; et
un élément enveloppant (17) qui enveloppe le noyau de talon (5) et qui est réalisé d'un corps semblable à un textile,
**caractérisé en ce que**
ledit noyau annulaire (10) est formé à partir d'un câblé à monofilaments et présente une section transversale circulaire, et
ledit élément enveloppant (17) est réalisé d'un corps semblable à un textile ayant un câblé en fibres organiques (15).

2. Bandage pneumatique selon la revendication 1, dans lequel ledit corps semblable à un textile comprend des câblés organiques (15) qui sont agencés chacun en parallèle.

3. Bandage pneumatique selon la revendication 1, dans lequel ledit corps semblable à un textile comprend des câblés organiques (15) agencés dans la direction dans laquelle ils recoupent les câblés.

4. Bandage pneumatique selon les revendications 1 à 3, dans lequel ledit corps semblable à un textile comprend en outre un revêtement en caoutchouc moulé (18) sur au moins une surface de lui-même.

5. Bandage pneumatique selon la revendication 1, dans lequel ladite nappe de carcasse (6A) est retournée vers le haut autour de l'âme de talon (5) enveloppée par l'élément enveloppant (17).

6. Bandage pneumatique selon la revendication 1, dans lequel ledit noyau annulaire (10) a un diamètre de 1,5 à 8,0 mm.

7. Bandage pneumatique selon la revendication 1, dans lequel ledit noyau annulaire (10) est réalisé en un matériau à base de résine ayant un module d'élasticité en traction de 1000 kg/mm² ou moins.

8. Bandage pneumatique selon la revendication 1, dans lequel ledit noyau annulaire (10) est réalisé en un matériau à base de métal ayant une teneur en carbone de 0,1 à 0,9 % en poids.

9. Bandage pneumatique selon la revendication 1, dans lequel ledit fil de gaine (11A) est réalisé d'un fil étiré à froid avec un diamètre de 0,8 à 2,6 mm.

10. Bandage pneumatique selon la revendication 9, dans lequel ledit fil de gaine (11A) présente une teneur en carbone dans une plage de 0,65 à 0,88 % en poids.

11. Bandage pneumatique selon la revendication 1, dans lequel ledit câblé en fibres organiques (15) a une finesse qui ne dépasse pas 1500 dtex.

12. Bandage pneumatique selon la revendication 1, dans lequel ledit câblé en fibres organiques (15) a une finesse qui ne dépasse pas 800 dtex.

13. Bandage pneumatique selon la revendication 1, dans lequel ledit câblé en fibres organiques (15) a une finesse qui ne dépasse pas 400 dtex.

14. Bandage pneumatique selon la revendication 1, dans lequel ledit élément enveloppant (17) est formé en pliant le corps semblable à un textile le long de la direction d'une circonférence de l'âme de talon (5), et en faisant chevaucher les deux bords de celui-ci.

15. Bandage pneumatique selon la revendication 1, dans lequel ledit élément enveloppant (17) est formé en enroulant en hélice le corps semblable à un textile autour de l'âme de talon (5).

16. Bandage pneumatique selon la revendication 15, dans lequel ledit corps semblable à un textile est enroulé en hélice avec la même direction que le fil de gaine (11A).
